(19) Europäisches Patentamt / European Patent Office / Office européen des brevets

(11) **EP 2 712 475 B1**

(12) # EUROPEAN PATENT SPECIFICATION

(45) Date of publication and mention
of the grant of the patent:
**24.05.2023 Bulletin 2023/21**

(21) Application number: **12700555.1**

(22) Date of filing: **17.01.2012**

(51) International Patent Classification (IPC):
**H02J 3/38** (2006.01)   **H02M 7/5387** (2007.01)

(52) Cooperative Patent Classification (CPC):
**H02M 7/53871; H02J 3/381;** H02J 2300/28;
Y02E 10/76

(86) International application number:
**PCT/EP2012/050586**

(87) International publication number:
**WO 2013/026583 (28.02.2013 Gazette 2013/09)**

(54) **METHOD FOR CONTROLLING A DC-AC CONVERTER OF A WIND TURBINE**

VERFAHREN ZUR STEUERUNG EINES AC/DC-WANDLERS EINER WINDTURBINE

PROCÉDÉ POUR COMMANDER UN CONVERTISSEUR CONTINU-ALTERNATIF D'UNE
ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2011 EP 11178291**

(43) Date of publication of application:
**02.04.2014 Bulletin 2014/14**

(73) Proprietor: **Siemens Aktiengesellschaft
80333 München (DE)**

(72) Inventor: **BROGAN, Paul Brian
Glasgow G63 9 AG (GB)**

(74) Representative: **Siemens Patent Attorneys
Postfach 22 16 34
80506 München (DE)**

(56) References cited:
**GB-A- 2 451 463     JP-A- 7 015 969**

- **Summary Klaus Unterkofler: "a Double Update
Mode of PWM Generation Unit of the ADMCF34X
ANF34X-02 a Double Update Mode of PWM
Generation Unit of the ADMCF34X Table of
Contents", , 1 January 2002 (2002-01-01), pages
1-9, XP055308262, Retrieved from the Internet:
URL:ftp://ftp.analog.com/pub/www/marketSol
utions/motorControl/applicationCode/admcf3
4x/pdf/du_modeF34X.pdf [retrieved on
2016-10-06]**
- **VELASCO D ET AL: "An Active Anti-Islanding
Method Based on Phase-PLL Perturbation", IEEE
TRANSACTIONS ON POWER ELECTRONICS,
INSTITUTE OF ELECTRICAL AND ELECTRONICS
ENGINEERS, USA, vol. 26, no. 4, 1 April 2011
(2011-04-01), pages 1056-1066, XP011379265,
ISSN: 0885-8993, DOI:
10.1109/TPEL.2010.2089643**

**Description**

Field of invention

The present invention relates to a method and a controller for controlling a DC-AC converter for converting a DC input voltage to an AC output voltage, wherein the DC-AC converter is comprised in a wind turbine.

Art Background

A wind turbine may comprise a rotation shaft to which a number of rotor blades are connected. Upon rotation of the rotation shaft an induction generator or in general an electric generator, may be driven to generate an electric power stream having a variable frequency depending on the frequency of the rotation of the rotation shaft. In order to provide a (nominally fixed frequency) fixed frequency AC power stream to a utility grid, between the generator and the utility grid, in particular between the generator and a point of common coupling to which a number of wind turbines are connected, a wind turbine converter may be connected.

The wind turbine converter may comprise a AC-DC converter portion (also referred to as generator bridge), a DC-link coupled to the generator bridge and a DC-AC converter portion (also referred to as network bridge) connected to the DC-link. Thereby, the generator bridge may control a generator torque, or the generator power, which indirectly influences the rotation speed of the rotation shaft.

The network bridge may be controlled by a network bridge controller or a DC-AC converter controller in order to supply a AC-voltage to the utility grid which has a predetermined grid frequency and wherein a power stream having a predetermined active power portion and a predetermined reactive power portion or a reference AC voltage may be supplied to the utility grid.

US 5,083,039 discloses a variable speed wind turbine having a generator controller that uses field orientation to regulate either stator current or voltage to control the torque reacted by the generator. Further, an inverter controller regulates the output currents to supply multi-phase AC power having leading or lagging current at an angle specified by a power factor control signal.

However, it has been observed that conventional converters of a wind turbine, in particular a conventional DC-AC converter of a wind turbine, do not supply a AC power stream to the utility grid that satisfies requirements of the utility grid, in particular regarding voltage stability, power factor, active power, reactive power and the like, in particular during changing grid states or conditions.

In particular, in a conventional system, there is still a dependency on the system impedance, the number of turbines in operation, grid fault level, power factor correction capacitors, and it is desirable to have a control scheme that decouples all of the grid impedance from the turbine converter network bridge current controller. In this way the same controller of the invention may be used in all wind farms, without concerns related to what the grid impedance is.

GB 2 451 463 A refers to a voltage source converter. An active rectifier / inverter includes semiconductor switches operated by pulse width modulation and AC terminals connected to a load system comprising such as an active filter, a transformer, a protective switchgear and a supply network. It is controlled by a discrete-time voltage-oriented control scheme that includes calculating a discrete-time model of the active rectifier/inverter and the load system for both balanced and unbalanced operating conditions in a particular sampling period to derive modulation indexes m+, m- for a PWM controller to produce gate drive signals for a subsequent sampling period.

Summary Klaus Unterkofler: "a Double Update Mode of PWM Generation Unit of the ADMCF34X ANF34X-02 a Double Update Mode of PWM Generation Unit of the ADMCF34X Table of Contents", 1 January 2002 (2002-01-01), pages 1-9, XP055308262, Retrieved from the Internet: URL:ftp://ftp.analog.com/pub/www/marketSolutions/motorControl /applicationCode/admcf34x/pdf/du_modeF34X.pdf [retrieved on 2016-10-06] describes a number of different switching strategies that can be used to produce resultant PWM signals. This application note describes the operation of the PWM unit in the double update mode, discusses the advantages of operating in this mode compared with the single update mode and describes a template DSP file that can be used to operate the PWM Generation Unit of the ADMCF34X in double update mode. Sample measured waveforms are also presented.

VELASCO D ET AL: "An Active Anti-Islanding Method Based on Phase-PLL Perturbation", IEEE TRANSACTIONS ON POWER ELECTRONICS, INSTITUTE OF ELECTRICAL AND ELECTRONICS ENGINEERS, USA, vol. 26, no. 4, 1 April 2011 (2011-04-01), pages 1056-1066,XP011379265, ISSN: 0885-8993, DOI: 10.1109/TPEL.2010.2089643 describes an active anti-islanding method based on Phase-PLL perturbation.

There may be a need for a method and for a controller for controlling a DC-AC converter of a wind turbine, for converting a DC input voltage to an AC output voltage having a predetermined grid period, wherein predetermined electrical requirements can be met.

This need may be met by the subject matter according to the independent claims. Advantageous embodiments of the present invention are described by the dependent claims.

EP 2 712 475 B1

## Summary of the Invention

According to an embodiment of the present invention it is provided a method for controlling a DC-AC converter for converting a DC input voltage to an AC output voltage having a predetermined grid period, comprising measuring, at a first point in time, a voltage sample of a filtered version (in particular based on a single measured sample or a plurality of measured samples) of the AC output voltage; determining a control signal for a controllable switch of the DC-AC converter based on the measured voltage sample; adjusting, at a second point in time, a conduction state of the controllable switch based on the control signal, wherein a time difference between the second point in time and the first point in time is less than a switching period for periodically switching the controllable switch.

The DC-AC converter may be a portion, in particular a network bridge portion, or a AC-AC converter of a wind turbine. The DC-AC converter may be connected to a DC-link of the wind turbine converter. The DC-AC converter may comprise plural controllable switches, such as transistors, in particular IGBTs (isolated gate bipolar transistors), but not limited to IGBT's whose conductance state(s) may be controlled by one or more gate control circuits. The controllable switches may be controlled such that at an output of the DC-AC converter the AC output voltage has the predetermined grid frequency (wherein the grid frequency is equal to the inverse of the grid period).

In particular, the DC-AC converter may be controlled by sending pulse width modulation signal(s) to the controllable switches. Thereby, the pulse width modulation signal may be characterized by a switching period defining a time span or time range within which a single modulation pulse is supplied to the gates of the controllable switches. In particular, the switching period may be much shorter (such as 10 times to 100 times shorter) than the grid period. By controlling the plural controllable switches by plural subsequent pulses having in particular different duty cycles (reflecting a duration of an ON state compared or related to a duration of an OFF state) the AC-output voltage may at least approximately resemble or being equal to a sine or cosine output voltage having the predetermined grid period or having the predetermined grid frequency.

Before supplying the AC output voltage at the output of the DC-AC converter to the utility grid the AC output voltage may be filtered using at least an inductor or reactor, in particular comprising a wire wound around an iron core. Thereby, undesired frequency components (in particular frequency components having frequency higher than the grid frequency) of the AC output voltage may be filtered out. Further, the filtering AC output voltage may also comprise performing a pulse width modulation filtering using a pulse width modulation filter, in particular comprising a parallel connection of capacitors and inductances and/or a capacitor and a resistor.

The voltage sample measured at the first point in time may represent a feedback signal during the control method. In particular, the voltage sample is or may be measured at a location not directly at the output terminal of the DC-AC converter but instead only beyond the inductor or reactor of the wind turbine, which may be directly connected or indirectly connected to the output terminal of the DC-AC converter and may act to generate the filtered version of the AC output voltage when supplied with the AC output voltage. Further, to the filtering of the AC output voltage in addition also a pulse width modulation filter may contribute.

The control signal (in particular an electrical control signal and/or optical control signal and/or wireless control signal) may be supplied to one or more gate or control terminals of the controllable switch or the one or more controllable switches comprised in the DC-AC converter.

The control signal may in particular comprise one or more pulses, in particular pulse width modulation pattern which is adapted such that when the controllable switch or the controllable switches are supplied with the control signal (at their corresponding gate terminals) the AC output voltage at the output terminal of the DC-AC converter has the predetermined grid frequency and further the power output stream has a particular reactive power and a particular active power or AC voltage Thus, voltage and current output by the DC-AC converter have a particular predetermined phase shift relative to each other.

The conduction state of the controllable switch (in particular transistor, in particular IGBT) may be performed by supplying the control signal (or a signal derived therefrom) to a gate terminal of the controllable switch. In particular, the control signal may cause the controllable switch to turn on for a particular on-time and turn off for a particular off-time within the switching period. When the control signal comprises plural pulses across plural switching periods the control signal may cause the controllable switch to turn on during a number of subsequent plural on times and may turn off during plural subsequent off-times.

The method provides a fast feedback of the voltage sample, such that the time span or time interval between measuring the voltage sample and adjusting the conduction state of the controllable switch(es) is less than the switching period. Thereby, the stability of the control method may be improved. In particular, the influence of a grid impedance may be taken into account, while the stability of the control method may be improved or even ensured. An intention or an object of the present invention (which is solved by the present invention) may be to decouple the stability of the net bridge current controller from the grid impedance external to the turbine transformer.

By embodiments of the present inventions the grid impedance (which may in particular rapidly change due to distributed capacitance by high or medium voltage cabling, power factor correction capacitors, leading to resonance.

The frequency that these resonances occurs can change due to the number of turbines connected to the point of common coupling or the utility grid, due to transmission line failure and the like may be taken into account.

In particular, the corresponding controller may be characterized by an open loop gain and a closed loop gain. In particular, these controller gains may comprise a complex gain of what is referred to as the 'voltage feed-forward' (derived from the 'voltage-feedback' signal referred to in the next paragraph) contribution and a complex gain of the current feed-back contribution. Reducing the delay between the second point in time and the first point in time (the delay being also referred to as the quantity tc) may reduce the dependency of the closed loop controller gain and/or the open loop controller gain from the grid impedance. In particular, the complex gain voltage-forward contribution to the controller gain may be modified by reducing the delay such as to avoid undesirable values which could lead in a conventional system to an unstable control method with some AC grid resonances

Embodiments of the present invention propose a method of decoupling the grid impedance from the current loop stability, whilst retaining the high dynamic characteristics of the current controller required to achieve international grid fault ride through requirements and minimise the power converter hardware (desirable for economic reasons).

A grid connected power bridge may be controlled by a closed loop current controller according to embodiments. Typically this current controller may be a DQ axis (or Vector current controller) which represents the 3 phase set of AC currents and voltages on the synchronously rotating reference frame by a D (Direct) axis component and a Q (quadrature) axis component. In the steady state when the 3 AC quantities are balanced sine waves the Q ad D axis components are DC quantities. Typically a vector current controller employs a PI (proportional integral) control, resulting in zero steady state error. The current is controlled in such a 3 phase power converter by the correct modulation of a set of 3 phase PWM voltages. In order for such a scheme to work a measure of the 3 phase AC voltages and a measure of the 3 phase currents, referred to as the, 'voltage feedback' and the 'current feedback' respectively. Typically there are 2 'synchronously rotating reference frames' one which is used to control the positive sequence current components and a second which is used to control the negative sequence current component. It most wind turbines there may be no need to control the zero sequence current due to the presence of a delta winding within the turbine transformer, and the additional cost of hardware with which to control the zero sequence current is not desirable.

According to an embodiment of the present invention the time difference is greater than zero seconds, in particular between 1% and 50%, in particular between 2% and 10%, further in particular between 3% and 7%, of the switching period. The smaller the time difference is (or the smaller the delay is) the more stable the control method may be. Thereby and in particular, the control method may respond to quickly changing grid impedance.

According to an embodiment of the present invention the grid period is between 10 and 500 times, in particular between 20 and 70 times, in particular 50 times, the switching period. If the switching period is much smaller than the grid period the AC output voltage may resemble with a higher accuracy the sine wave or cosine wave form of the desired AC output voltage having the predetermined grid frequency.

According to an embodiment of the present invention the switching period is between is between 2000 micro seconds and 50 micro seconds, in particular between 1000 micro seconds and 100 micros seconds, in particular 400 micro seconds. Thereby, the stability of the control method may further be improved and may make use of conventional equipment for switching.

According to an embodiment of the present invention the control signal is indicative of a pulse width modulation pattern, in particular across the grid period, defining plural control pulses, wherein the plural control pulses are supplied to the controllable switch over plural subsequent switching periods, in particular spanning one grid period.

The pulse width modulation pattern may comprise the definition of plural on-times of the plural control pulses. Further, plural off-times of the plural control pulses may be the times during which there are no on-times. One pulse width modulation pattern may comprise the definition of the pulses (in particular their widths and location) across in particular one grid period. Thereby, the intended AC output voltage may be accurately defined regarding its frequency and magnitude and phase relative to the output current.

According to an embodiment of the present invention the width(s) of the plural control pulses are based on the measured voltage sample of the filtered AC output voltage. Thus, the measured voltage sample is taken into account to compute, determine or calculate the width and the location of the pulses of the plural control pulses. Thereby, an effective feedback control method may be provided.

According to an embodiment of the present invention, the control signal is updated after the switching period, in particular updated after every switching period, wherein the control signal is in particular updated after half of the switching plural, in particular after every half of the switching period. Thereby, always the most recent or newest voltage sample is used to calculate or compute or determine the control signal. Thereby, changes of the electrical system, in particular changes of the grid impedance may be effectively taken into account. Thereby, it is enabled to change the control signal, in particular the width modulation pulse pattern accordingly to counteract the changes in the grid impedance.

According to an embodiment of the present invention, the method further comprises measuring, before the first point in time, plural further voltage samples of previous filtered AC output voltages over a time range and combining, in particular averaging the plural further voltage samples and the voltage sample to obtain a combined, in particular an average, voltage of the filtered AC output voltage, wherein the control signal is based on the combined, in particular average, voltage.

Combining the plural further voltage samples and the voltage sample may comprise selecting a subset and/or (digitally) calculating a (weighted) average and/or (digitally) filtering.

Measuring plural further voltage samples of previous filtered AC output voltages over the time range may enable to more accurately determine or estimate the course or the shape of the filtered AC output voltage across plural time point within the time range. Thereby, a comparison to an intended time course or intended shape of the AC output voltage may be simplified or even enabled. Averaging the plural further voltage sample may enable to reduce measurement errors or noise in the voltage sample. Thereby, the control method may further be improved.

According to an embodiment of the present invention the time range is between 0.2 and 2.0 times the switching period, in particular equal to 0.5 times the switching period, in particular equal to the switching period.

Thereby, a good compromise between the aim to reduce the delay and reducing measurement errors may be achieved.

In particular, the time difference between the second point in time and the point in time at which the last voltage sample of a filtered version of the AC output voltage is measured may be less than the switching period for periodically switching the controllable switch.

According to an embodiment of the present invention the measuring is performed at a location beyond a filter inductor connected at an AC output terminal of the DC-AC converter, wherein the inductor, in particular in combination with a pulse width modulation filter connected to the location, provides the filtered version of the AC output voltage.

The filter inductor may also be referred to as reactor of the wind turbine which is provided to filter undesired frequency components out of the AC output voltage of the DC-AC converter. The filter inductor may comprise a wire wound around an iron core. The filter inductor may be directly or indirectly connected to an output terminal of the DC-AC converter. At the end of the filter inductor not connected to the DC-AC converter the voltage sample may be taken and a pulse width modulation filter may connected, in order to even improve the filtering process.

Between the filter inductor and the utility grid (or between the filter inductor and a point of common coupling to which a plurality of wind turbines are connected) the location at which the voltage sample is taken may also be arranged. Alternatively, the location may be arranged at the point of common coupling. Alternatively, the location may be arranged such that the voltage sample reflects a filtered version of the AC output voltage which is output by the DC-AC converter.

According to an embodiment of the present invention the voltage sample of the filtered version of the AC output voltage is further filtered using a Butterworth filter, in particular a second order Butterworth filter, wherein the control signal is based on the further filtered voltage sample.

According to an embodiment of the present invention the method further comprises measuring a current sample of an output current of the DC-AC converter, wherein the control signal is further based on the current sample.

Measuring also a current sample (in particular a number of current samples which may be averaged) may further improve the control method. In particular, a desired reactive power and desired active power may be achieved by considering both the voltage sample and the current sample measured. Thereby, changes in the grid impedance may be responded to.

According to an embodiment of the present invention the current sample is a three phase current sample, the method further comprising transforming the current sample to a DQ coordinate system; and/or applying a Notch filter to the current sample and/or the transformed current sample; and/or forming a current difference between the current sample or the Notch filtered transformed current sample and a reference current; supplying the current difference to a PI-controller which provides a controller output; and/or summing the controller output and a term obtained from an inductance of the filter inductor and a grid frequency to obtain a first sum; and/or based on the first sum, performing a transformation to a three phase signal; and/or summing the voltage sample in a form of a three phase voltage sample, in particular the average voltage, and the three phase signal to obtain a second sum, wherein the control signal is in particular based on the transformed current sample and/or the Notch filtered transformed current sample and/or the controller output and/or the first sum and/or the second sum.

It should be understood that features individually or in any combination disclosed, described, mentioned or explained regarding a method for controlling a DC-AC converter may also be applied to a controller for controlling a DC-AC converter according to an embodiment of the present invention and vice versa.

According to an embodiment it is provided a controller for controlling a DC-AC converter for converting a DC input voltage to an AC output voltage having a predetermined grid period, the controller comprising an input terminal for obtaining a voltage sample of a filtered version of the AC output voltage measured at a first point in time; a processor adapted to determine a control signal for a controllable switch of the DC-AC converter based on the measured voltage sample; a control circuit adapted to adjust, at a second point in time, a conduction state of the controllable switch based on the control signal, wherein a time difference between the second point in time and the first point in time is less than a switching period for periodically switching the controllable switch.

The processor may comprise a pulse width modulation calculation module which is adapted to calculate a pulse width modulation pattern for controlling gates of one or more controllable switches in the DC-AC converter.

According to an embodiment of the present invention it is provided a wind turbine comprising a DC-AC converter and a controller according to an embodiment of the present invention, wherein the controller is provided for controlling the DC-AC converter.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Embodiments of the present invention are now described with reference to the accompanying drawings. The invention is not restricted to the illustrated or described embodiments.

Brief Description of the Drawings

Fig. 1    schematically illustrates a wind turbine according to an embodiment of the present invention comprising a controller according to an embodiment of the present invention;

Fig. 2    schematically illustrates a single line schematic of a DC-AC converter controller according to an embodiment of the present invention controlling a DC-AC converter;

Fig. 3    schematically illustrates a controller for controlling a DC-AC converter according to an embodiment of the present invention;

Fig. 4    illustrates graphs considered while designing the controller illustrated in Fig. 3;

Fig. 5    illustrates schematically a fast forward feedback pulse width modulation pattern generation scheme according to an embodiment of the present invention employed or performed by the controller illustrated in Fig. 3;

Fig. 6    schematically illustrates another fast forward feedback pulse modulation pattern generation scheme according to another embodiment of the present invention which is for example applied or performed by the controller illustrated in Fig. 3; and

Fig. 7    schematically illustrates a further fast forward feedback pulse width modulation pattern generation scheme applied or performed by the controller illustrated in Fig. 3 according to an embodiment of the present invention.

Detailed Description of embodiments of the present invention

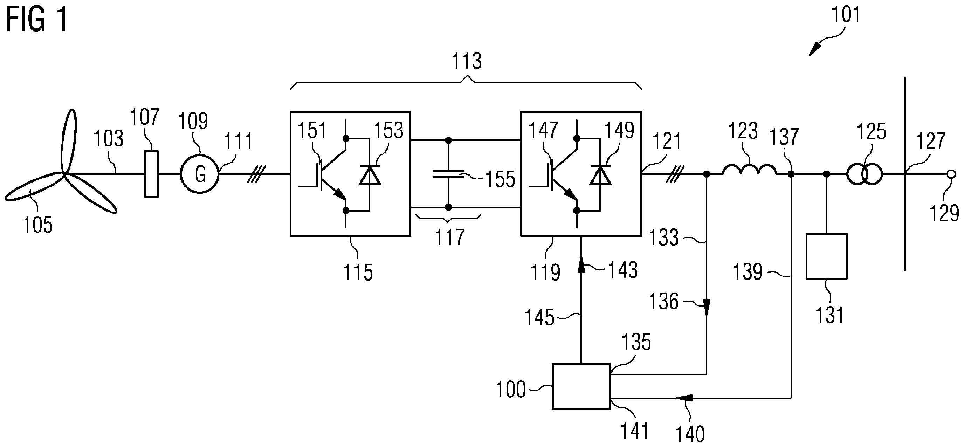

Fig. 1 schematically illustrates a wind turbine 101 according to an embodiment of the present invention including a controller 100 according to an embodiment of the present invention.

The wind turbine 101 includes a main rotation shaft 103 to which a plurality of rotor blades 105 are connected. Via a gear box 107 the rotation shaft 103 is connected to an induction generator (or permanent magnet generator) 109 which upon rotation of the rotation shaft 103 generates electric energy at an output terminal 111. Note that a gearbox is not required in all embodiments.

The wind turbine 101 further comprises a AC-AC converter 113 comprising a AC-DC converter portion 115, a DC link 117 and a DC-AC converter portion 119. An output terminal 121 (in particular representing a three phase, or multi terminaloutput terminal) of the DC-AC converter portion 119 is connected to a reactor or inductor 123 which filters the AC output voltage of the DC-AC converter portion 119 supplied to the output terminal 121. The reactor 123 is connected, via a transformer 125, to a point of common coupling 127 to which plural not illustrated wind turbines may be connected. The point of common coupling is connected, in particular via a not illustrated transformer, to a utility grid 129 providing electric energy to a plurality of consumers.

Also connected between the reactor 123 and the transformer 125 is a pulse width modulation filter 131 for further filtering the AC output voltage, such that a (sine wave or cosine wave) AC output current having a predetermined frequency, a predetermined amplitude, predetermined phase and is supplied to the utility grid 129.

The wind turbine 101 further comprises a controller 100 for controlling the DC-AC converter 119. The controller 100 measures a current sample 136 at the output terminal 121 of the DC-AC converter 119 via a measurement line 133 which is supplied to the input terminal 135. Further, the controller 100 receives a measurement signal or sample 140 of the filtered version of the AC output voltage which is measured at a location 137 between the reactor 123 and the transformer 125. The location 137 may according to alternative embodiments be arranged somewhere between the transformer 125 and the utility grid 129.

The measured filtered AC output voltage sample 140 is supplied via the measurement line 139 to another input terminal 141 of the controller 100. In particular, the filtered version 140 of the AC output voltage is measured at the location 137 at a first point in time. Based on the voltage sample 140 measured at the location 137 the controller 100 determines a control signal 143 which is transmitted via the control line 145 to the DC-AC converter 119 in order to adjust a conduction state of a controllable switch 147 comprised in the DC-AC converter 119. Thereby, the conduction state is adjusted at a second point in time which is after the first point in time, but the delay between the second point in time and the first point in time is less than a switching period T for periodically switching the controllable switch 147. In particular, the controllable switch 147 may be an IGBT, wherein in particular a diode 149 is connected in parallel to the controllable switch 147.

The AC-DC portion 115 of the generator 113 also comprises one or more controllable switches 151 and one or more diodes 153. The DC link 117 comprises one or more capacitors 155.

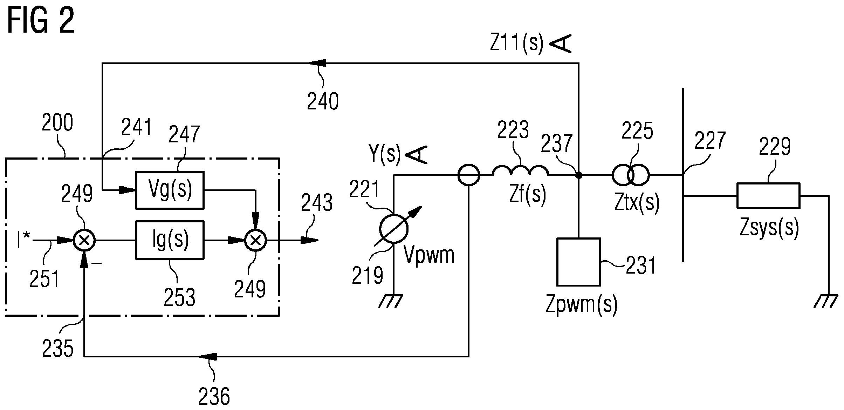

Fig. 2 schematically illustrates an electric scheme representing a portion of the wind turbine 101 illustrated in Fig. 1.

Elements or components similar in structure and/or function to elements or components illustrated in Fig. 1 are illustrated with the same reference sign differing only in the first digit. Thus, the controller 100 illustrated in Fig. 1 is here illustrated as a box 200.

The controller 200 receives at the input terminal 241 a filtered version 240 of the AC output voltage output at the terminal 221, wherein the filtered version is measured at the location 237 beyond the reactor 223. At the input terminal 235 the controller 200 receives a current sample 236 representing a measurement signal of a current output at the output terminal 221. The element 219 may represent the DC-AC portion 119 illustrated in Fig. 1 or a voltage source being controlled by the control signal 243 provided by the controller 200.

The controller 200 derives the controlled signal 243 based on the voltage sample 240 measured at the location 237 via the complex gain 247 (Vg(s)) of the voltage feed-forward contribution with which the measured voltage or voltage sample 240 is multiplied and provided to a summation element 249. The current sample 236 received at the input terminal 235 is considered by calculating a difference between a reference current 251 and the current sample, by multiplying this difference by a complex gain 253 (Ig(s)) of the current controller contribution, wherein the result is also supplied to the summation element 249. Thereby, the control signal 243 takes the voltage sample 240 as well as the current sample 236 into account.

The reactor 223 has the impedance Zf(s), the transformer 225 has the impedance Ztx(s), the grid 229 has the impedance Zsys(s) and the pulse width modulation filter 231 has the impedance Zpwm(s). Further, the following definitions apply:

$$Y(s) = \frac{1}{Zf(s) + (Zsys(s) + Ztx(s)) // Zpwm(s)}$$

$$Z11(s) = (Zsys(s) + Ztx(s)) // Zpwm(s)$$

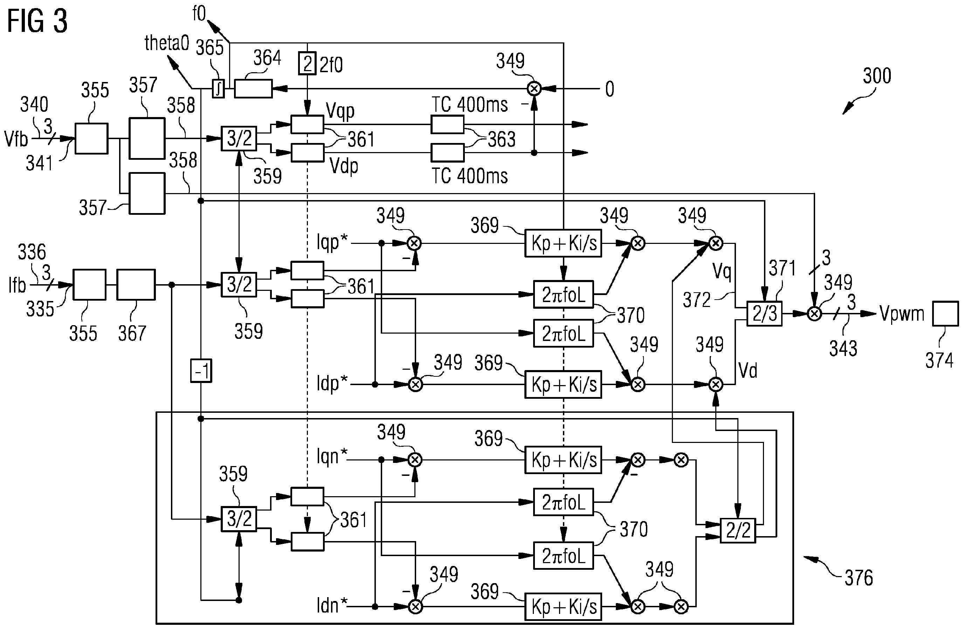

**Fig. 3** schematically illustrates a controller 300 for controlling a DC-AC converter (such as the converter 119 illustrated in Fig. 1) for converting a DC input voltage to an AC output voltage according to an embodiment of the present invention.

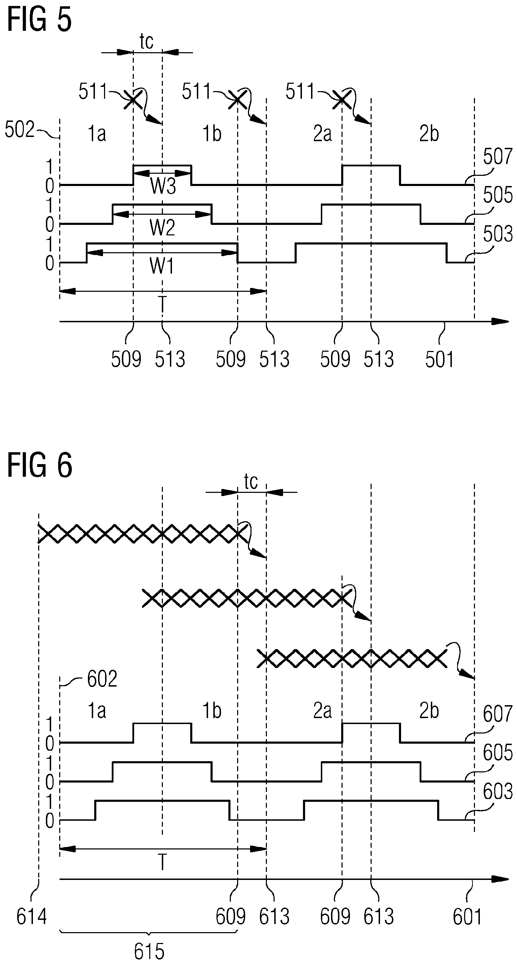

At the input terminal 341 the controller 300 receives a voltage sample 340. A second order Butterworth filter 355 having a cut-off frequency of 48 kHz is applied to filter the voltage sample 340. In the upper box 357 multiple samples are averaged to obtain an averaged sample 358. In the lower box 357, a single sample of the voltage may be taken, or multiple sample and averages as suggested by Fig 5, 6, and 7. The averaged sample 358 is supplied to a summation element 349. Another branch of the averaged sample or averaged voltage sample 358 is supplied to a transformation unit 359 which transforms a three-phase signal to a DQ coordinate system.

To the two components, namely the Q component and the D component, notch filters 361 . are applied and also low pass filters 363 are applied. These filters 361, 363 introduce a relatively large delay of approximately 400 ms. This largely delayed signal may have been used in a conventional controller. The output signal of one component is supplied to a summation element 349 which supplies a difference to a phase locked loop 364 which output signal is integrated by the integrator 365.

At the input terminal 335 the controller 300 receives the current sample 336 (in particular representing current flowing through the filter inductor 123 in Fig. 1) which is filtered by a second order Butterworth filter 355, synchronized and sampled by a module 367 and then transformed by the transformer 359 to a Q component and a D component which are supplied to notch filters 361. The output of the notch filters 361 is compared to a respective positive sequence reference current Iqp* and Idp*. Differences of this comparison are supplied to a PI controller 369, wherein to the output of the controllers 369 the reference currents multiplied by 2πf0L (via element 370) are added, wherein L represents the inductance of the reactor 123, 223 illustrated in Figs. 1 and 2, respectively, and f0 represents the grid frequency, in order to derive a first sum 372 In addition a second parallel current controller is used to control the negative sequence current to the reference values Iqn* and Idn*. The required voltages to regulate the negative sequence current Vqn and Vdn are inputs to the 2/2 conversion block 360, which converts these Vqn and Vdn references from the negative sequence synchronously rotating reference frame to the positive sequence synchronously rotating reference frame, where they are added to the output of the positive sequence current controller.

Results of these operations are then back transformed to a three-phase signal using the back transformer 371, wherein to its output the voltage 358 is added to obtain a control signal 343 based on which (or via a gate control circuit 374) controllable switches comprised in the DC-AC converter 119 illustrated in Fig. 1 are adjusted or controlled.

The open loop gain of the current controller 300 is given as:

$$G_{o/l}(s) = \frac{Ig(s)Y(s)}{1 - Vg(s)Z11(s)Y(s)}$$

Therefore the closed loop gain can be defined as

$$G_{c/l}(s) = \frac{G_{o/l}(s)}{1 + G_{o/l}(s)}$$
$$= \frac{Ig(s)Y(s)}{1 - Vg(s)Z11(s)Y(s) + Ig(s)Y(s)}$$

Since the total impedance is given by

$$Z_{total}(s) = \frac{1}{Y(s)}$$
$$= Z_{sfe}(s) + Z11(s)$$

Therefore the closed loop gain is

$$G_{c/l}(s) = \frac{Ig(s)}{Z_{sfe}(s) + Z11(s) - Vg(s)Z11(s) + Ig(s)}$$
$$= \frac{Ig(s)}{Z_{sfe}(s) + Z11(s)(1 - Vg(s)) + Ig(s)}$$

$$(\text{ID\_1})$$

In an ideal situation where the voltage feed-forward gain $Vg(s) \approx 1$ has unity gain the closed loop gain can be written as:

$$G_{c//l}(s) = \cfrac{1}{\cfrac{Z_{sfe}(s)}{Ig(s)} + 1}$$

The above explanation shows that in a conventional system due to the non-ideal nature of the gain Vg(s) the current controller gain, and stability margins are influenced by the grid impedance Z11(s).

Typically voltage feedforward will measure the AC voltages synchronously with the 3 phase currents, these will be measured via a A/D conversion and then used within a microprocessor or DSP, or FPGA to produce a PWM pattern at the next PWM period boundary.

Typically the PWM period may be 400μs but is not limited to this.

The problem with the conventional schemes is that there is a delay between the voltage (and or current, but we are particularly interested in the voltage here) being sampled and the PWM pattern being calculated and updated in response to this. This delay results in a phase shift in Vg(s), and there is then the possibility that the open loop denominator (1 - Vg * Z11 * Y) can be zero, resulting in an infinite gain and an unstable system. When this is considered against a typical wind farm consisting of multiple turbines, and significant variations in the capacitance introduced by the AC cables ( present in all wind farms), then it becomes difficult to ensure that the current controller is stable for all combinations that can exist on any site.

Consider this equation:

$$Vg(s) = \frac{1}{Z11(s)Y(s)}$$

(1)

This can be re- arranged as to identify the infinite gain when:

$$V_g(s) = \frac{1}{Z11(s)Y(s)}$$

$$= 1 + \frac{Z_{sfe}(s)}{Z11(s)}$$

(5)

The voltage feedforward gain Vg(s) will as a first approximation have a unity gain and a phase that will be -360° at 1/delay.

Reference sign 376 denotes a processor of the controller 300.

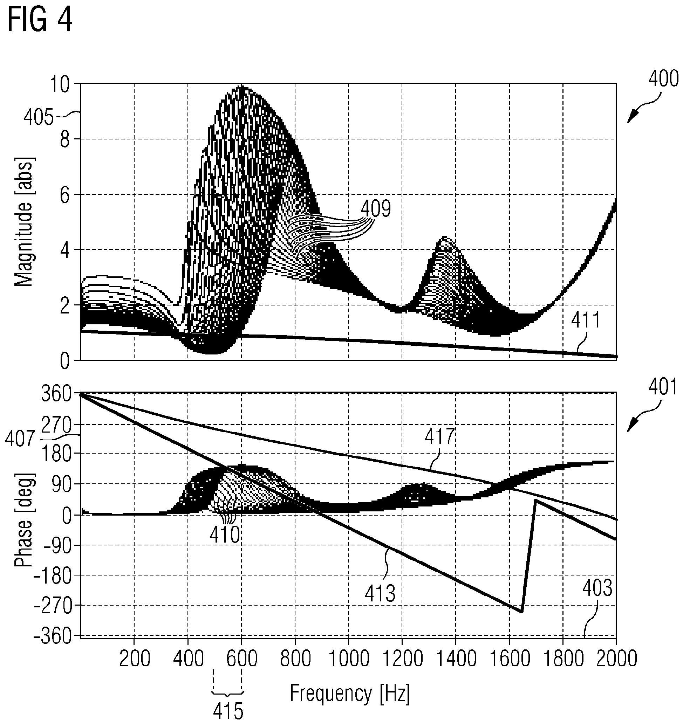

Fig. 4 illustrates an upper graph 400 and a lower graph 401, wherein on the common abscissa 403 the frequency is indicated, while on the ordinate 405 of the graph 400 the magnitude and on the ordinate 407 of the graph 401 the phase is indicated. Thereby, curves 409 in graph 400 sketch the course of the magnitude of the term 1/(Z11(s)Y(s)), whereas the graph 400 the phase of the term 1/(Z11(s)Y(s)) is indicated. The curve 411 in graph 400 illustrates the magnitude of Vg(s), i.e. the complex gain of the voltage feed-forward contribution (as illustrated in Fig. 2 and labelled with reference 247).

In graphs 400 and 401 illustrated in Fig. 4, it is assumed that a delay between measuring the voltage sample and triggering the controllable switch or updating the switching pattern is approx 1000 μs, (curve 411, 413). In contrast, the curve 417 represents the case, where the delay is much shorter, as is explained below and amounts to approximately 500 μs.

The grid impedance as shown by curves 409, and 410 is changing as a result of a resonance in the electrical system, the ‚family' of curves is a result of changing the number of turbines connected to this resonant system. However, this is for one specific wind farm, and this one specific resonance. If the generic case is considered then the family of curves 409, 410 can be extended further left and right on the frequency axis 403, so we would end up with almost all permutations of gain and phase being possible within the frequency range from 100 Hz to 2kHz, hence it is the intention to ensure that the PHASE of Vg(s) does not drop below 180 degs until above 2kHz.

In the graph 401 the curve 413 denotes the phase of the complex gain Vg(s). In ranges or intervals of the frequency, where the curve 411 intersects or is equal to one of the curves 409 (which differ due to potentially different grid impedances Z11(s)), and simultaneously curve 413 intersects or is equal to 410, an instability of the controller is expected, since the denominator becomes zero. In particular, as can be seen from Fig. 4 in a frequency interval 415 from about 500 Hz to 600 Hz the curve 411 intersects with one of the curves 409 and also the curve 413 intersects with one of the curves 410, such that in this frequency range the control process is unstable in a conventional system.

The impedance of the line reactor 123, 223 is 90°. The passive electrical system (Z11) will only have a phase in the range +90° to -90. When a resonance exists in the electrical system external to the turbine then the phase of Z11 changes from 90° to -90°, so therefore the total range of phase of $1/( Z11(s) Y(s) )$ will be within the range 0 - 180°.

Therefore intersection of the curves 410 and 413 can occur at frequencies >= 0.5/delay (such that Vg(s) also has a phase between 180° and 0). This condition is shown in the Fig. 4, (when the delay in Vg(s) is approximately 1000 $\mu$s), as stated previously

Therefore, in order to improve the stability of the controlling process, the phase of the complex gain Vg(s) is changed such as to decrease its slope compared to the slope of the curve 413. In particular, the curve 417 illustrates the phase of the complex gain Vg(s) as used according to an embodiment of the present invention. In particular, the slope of the curve 417 is smaller than the slope of the curve 413. In particular, the decrease of the slope is due to shortening a delay between measuring the voltage sample and triggering the controllable switch 147 comprised in the DC-AC converter 119 illustrated in Fig. 1.

If there is too much delay in the voltage feedforward path then certain combinations of grid impedance could result in infinite open loop gain. This is highly undesirable. The critical feature is that the phase of Vg(s) does not roll off, to be in the range 0 - 180°, within the critical range of frequencies, typically in the range 0 - 2.5kHz or 0 to 'switching frequency'. Therefore any software filters applied to the voltage sample 140, 240, such as the notch filters and low pass filters, need to be avoided, as they cause undesirable phase shifts within the Vg(s) term.

**Fig. 5** schematically illustrates a fast forward feedback control method according to an embodiment of the present invention.

On an abscissa 501 the time is indicated. On the ordinate 502 switching states of the controllable switch 147 illustrated in Fig. 1 are indicated, wherein the traces 503, 505, 507 illustrate pulses which are sent successively behind each other. For example, the pulses of trace 503 have a width w1, the pulses of trace 505 have a width w2 and the pulses of trace 507 have a width w3. The time interval T denotes the switching period which may for example be about 0.4 ms, i.e. 50 times smaller than the grid period of 20 ms, if the grid frequency equals to 50 Hz.

At a first point in time 509 a voltage sample (such as the sample 140 or 240 illustrated in Figs. 1, 2) is measured as indicated by the point 511. At a second point in time 513 which is a delay tc after the first point in time 509, the switching pattern, for the 2nd half of the PWM_period is updated, according to which the controllable switch 147 illustrated in Fig. 1 is switched is updated within the controller 100, 200 or 300. In particular, the updating of the switching pattern occurs at the mid point of the switching period T. Thus, the second point in time 513 is arranged at the mid point of the switching period T.

At the point 511 only one, 3 phase set of voltage samples may be acquired or measured.

If the voltage is sampled as late in the PWM period as possible, such as the scheme shown in Figure 5, then the delay tc is minimized and the phase characteristic of Vg(s) will not result in an infinite gain situation, as the phase of Vg(s) > 180° up to 2.5kHz. However in a practical systems it is not quite necessary to ensure the phase is >180 up to 2.5kHz, due to the influence of the PWM filter trap at 2.5kHz. Note here the voltage is now sampled once per PWM ½ period, like the current and this provides sufficient stability margin of the Vg(s) term.

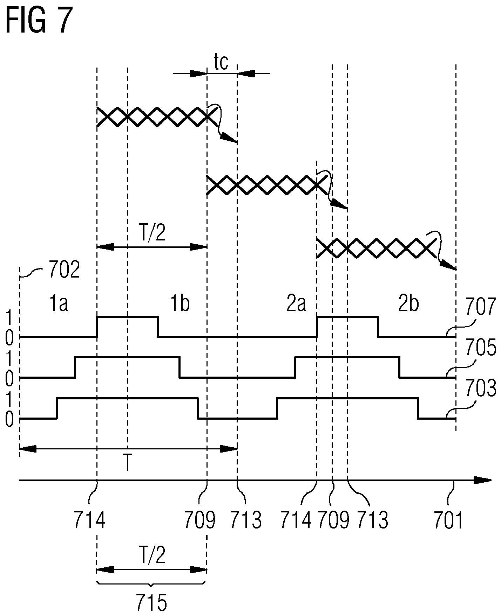

**Fig. 6** schematically illustrates another embodiment of performing an update of a switching pattern according to an embodiment of the present invention. A further embodiment is illustrated in **Fig. 7.**

On the abscissas 601, 701 the time is indicated. The ordinates 602, 702 indicate switching traces or on-states or off-states of the controllable switch 147 illustrated in Fig. 1. Thereby, the traces 603, 605, 607 represent a switching pattern or at least a portion of a switching pattern according to which the controllable switch 147 is triggered.

In contrast to the embodiment illustrated in Fig. 5 in the embodiments illustrated in Figs. 6 and 7 the AC output voltage or the filtered version of the AC output voltage is measured over several time points (such as between 2 and 500, in particular between 5 and 50), wherein a plurality of samples is measured beginning at a point in time 614 and 714, respectively for Figs. 6 and 7.

In particular, in a time interval 615 from the point in time 614 to the second point in time 609, which equals to the switching time T, plural voltage samples are measured. From the plural samples an average voltage is determined. At the second point in time 613 the switching pattern is updated considering the averaged voltage. Thereby, a delay tc between the second point in time 613 and the first point in time 609 is less than the switching period T.

According to the embodiment illustrated in Fig. 7 the further point in time 714 is spaced apart from the first point in time 709 by exactly one half of the switching period T. Again, the switching pattern is updated at the second point in time 713, which is by the delay tc later than the first point in time 709. Again, the delay tc is less than the switching period T, in particular is about 1/10 of the switching period T in the exemplary embodiment illustrated in Fig. 7.

The modified current controller with fast voltage feed-forward illustrated in Fig. 3 may actually not be immune to the PWM ripple introduced into the voltage by this particular network bridge, or adjacent (external to this turbine) PWM voltage sources. It is therefore possible to identify 2 characteristics of the voltage feedforward signal that are required, these being:

The 'average voltage feedback over a PWM period or ½ PWM period' is required to avoid aliasing and other undesirable low order harmonic voltages appearing in the PWM output voltage. The phase shift associated with the delay between taking the average of the voltage feedback, performing the PWM calculations and updating the bridge firing pattern, must be significantly less than a PWM_period/2 in order to satisfy the constraints of equation 5, that the phase of the voltage feedforward feedback path be < 180° for freq 0 - 2.5kHz.

In order to achieve these constraints the scheme proposed in Fig 6 may be suggested, where the voltage is multiple sampled and an average taken over PWM period, and the computation delay between computing this average voltage and updating the next PWM period is minimised (to something in the order of 20 μs, or 5% of the total PWM period T).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

List of reference signs:

| | |
|---|---|
| 100 | controller |
| 101 | wind turbine |
| 103 | rotation shaft |
| 105 | rotor blade |
| 107 | gear box |
| 109 | generator |
| 111 | output terminal of generator |
| 113 | AC-AC converter |
| 115 | AC-DC converter |
| 117 | DC-link |
| 119 | DC-AC converter |
| 121 | output terminal of the DC-AC converter |
| 123 | inductor or reactor |
| 125 | transformer |
| 127 | point of common coupling |
| 129 | utility grid |
| 131 | pulse width modulation filter |
| 133, 139 | electric lines |
| 135, 141 | controller input terminals |
| 143 | control signal |
| 140 | filtered version of AC output voltage |
| 247 | complex gain of voltage feed-forward contribution |
| 249 | summation element |
| 251 | reference current |
| 253 | complex gain of current feed-forward contribution |
| 355 | second order Butterworth filter |
| 357 | sampling and averaging module |
| 358 | averaged values |
| 359 | transformation element |
| 361, 363 | filters |
| 369 | PI-controller |
| 370 | multiplication element |
| 371 | back transformation module |
| 343 | control signal |
| 400, 401 | graphs |

| 403 | abscissa |
|---|---|
| 405, 407 | ordinate |
| 409, 410 | curves for different grid impedances |
| 411 | magnitude of Vg(s) |
| 413 | phase of Vg(s) for delay of 800 ms |
| 417 | phase of Vg(s) for delay of xxx |
| 503, 505, 507 | pulse traces |
| w1, w2, | w3 width or pulses of the pulse traces |
| 509 | first point in time |
| 513 | second point in time |
| 613, 713 | further point in time |
| T | switching period |
| tc | delay |

**Claims**

1. Method for controlling a DC-AC converter (119) for converting a DC input voltage to an AC output voltage having a predetermined grid period, comprising:

   measuring, at a first point in time (509), a voltage sample (140) of a filtered version of the AC output voltage;
   determining a control signal (143) for a controllable switch (147) of the DC-AC converter (119) based on the measured voltage sample (140);
   adjusting, at a second point in time (513), a conduction state of the controllable switch (147) according to the control signal (143),
   wherein the control signal (143) is indicative of a pulse width modulation pattern (503, 505, 507) across the grid period, defining plural control pulses, wherein the plural control pulses are supplied to the controllable switch (147) over plural subsequent switching periods spanning one grid period,
   wherein the pattern according to which the controllable switch (147) is switched, is updated for the second half of the switching period,
   wherein a time difference (tc) between the second point in time (513) and the first point in time (509) is less than a switching period (T) for periodically switching the controllable switch (147).

2. Method according to claim 1,
   wherein the time difference (tc) is greater than zero seconds, in particular between 1% and 50%, in particular between 2% and 10%, further in particular between 3% and 7%, of the switching period.

3. Method according to claim 1 or 2,
   wherein the grid period (Tgrid) is between 10 and 500 times, in particular between 20 and 70 times, in particular 50 times, the switching period (T).

4. Method according to one of the preceding claims,
   wherein the switching period (T) is between 2000 micro seconds and 50 micro seconds, in particular between 1000 micro seconds and 100 micros seconds, in particular 400 micro seconds .

5. Method according to the preceding claim,
   wherein widths (w1, w2, w3) of the plural control pulses (503, 505, 507) are based on the measured voltage sample of the filtered AC output voltage,
   wherein in particular the widths (w1, w2, w3) of the plural control pulses (503, 505, 507) are further based a processed measured current sample (336).

6. Method according to one of the preceding claims,

   further comprising

   measuring, before (613) the first point in time (609), plural further voltage samples of previous filtered AC output voltages over a time range (615) and
   combining, in particular averaging, the plural further voltage samples and the voltage sample to obtain a combined voltage (358) of the filtered AC output voltage,

wherein the control signal is based on the combined voltage (358) .

7. Method according to the preceding claim,
wherein the time range (615, 715) is between 0.2 and 2.0 times the switching period (T), in particular equal to 0.5 times the switching period, in particular equal to the switching period.

8. Method according to one of the preceding claims,
wherein the measuring is performed at a location (137) beyond a filter inductor (123) connected at an AC output terminal (121) of the DC-AC converter (119), wherein the filter inductor (123), in particular in combination with a pulse width modulation filter (131) connected to the location (137), provides the filtered version of the AC output voltage.

9. Method according to one of the preceding claims,
wherein the voltage sample of the filtered version of the AC output voltage is further filtered using a Butterworth filter (355), in particular a second order Butterworth filter, wherein the control signal is based on the further filtered voltage sample.

10. Method according to one of the preceding claims, further comprising:
measuring a current sample (136, 336) of an output current of the DC-AC converter, wherein the control signal is further based on the current sample.

11. Method according to the preceding claim,

wherein the current sample is a three phase current sample, the method further comprising:

transforming (359) the current sample to a DQ coordinate system; and/or
applying a Notch filter (361) to the current sample and/or the transformed current sample; and/or
forming a current difference between the current sample or the Notch filtered transformed current sample and a reference current;
supplying the current difference to a PI-controller (369) which provides a controller output; and/or
summing the controller output and a term obtained from an inductance of the filter inductor and a grid frequency to obtain a first sum (372); and/or
based on the first sum, performing a transformation (371) to a three phase signal; and/or
summing the voltage sample (358) in a form of a three phase voltage sample, in particular the average voltage, and the three phase signal to obtain a second sum (343),

wherein the control signal is in particular based on
the transformed current sample and/or
the Notch filtered transformed current sample and/or
the controller output and/or
the first sum and/or
the second sum.

12. Controller (100, 200, 300) for controlling a DC-AC converter (119) for converting a DC input voltage to an AC output voltage having a predetermined grid period, the controller comprising:

an input terminal (141) for obtaining a voltage sample (140) of a filtered version of the AC output voltage measured at a first point in time (609);
a processor (376) adapted to determine a control signal (143) for a controllable switch (147) of the DC-AC converter based on the measured voltage sample, wherein the control signal (143) is indicative of a pulse width modulation pattern (503, 505, 507) across the grid period, defining plural control pulses, wherein the plural control pulses are supplied to the controllable (147) switch over plural subsequent switching periods spanning one grid period,
wherein the pattern according to which the controllable switch (147) is switched, is updated for the second half of the switching period;
a control circuit (374) adapted to adjust, at a second point in time, a conduction state of the controllable switch based on the control signal,
wherein a time difference (tc) between the second point (613) in time and the first point in time (609) is less than a switching period (T) for periodically switching the controllable switch.

13. Wind turbine (101) comprising a DC-AC converter (119) and a controller (100) according to the preceding claim, the controller being for controlling the DC-AC converter.


**Patentansprüche**

1. Verfahren zum Steuern eines DC-AC-Wandlers (119) zum Umwandeln einer DC-Eingangsspannung in eine AC-Ausgangsspannung mit einer vorbestimmten Netzperiode, umfassend:

   Messen, zu einem ersten Zeitpunkt (509), eines Spannungsabtastwerts (140) einer gefilterten Version der AC-Ausgangsspannung;
   Bestimmen eines Steuersignals (143) für einen steuerbaren Schalter (147) des DC-AC-Wandlers (119) basierend auf dem gemessenen Spannungsabtastwert (140);
   Anpassen, zu einem zweiten Zeitpunkt (513), eines Leitungszustands des steuerbaren Schalters (147) gemäß dem Steuersignal (143),
   wobei das Steuersignal (143) ein Pulsbreitenmodulationsmuster (503, 505, 507) über die Netzperiode hinweg, das mehrere Steuerimpulse definiert, angibt, wobei die mehreren Steuerimpulse über mehrere nachfolgende Schaltperioden, die sich über eine Netzperiode erstrecken, an den steuerbaren Schalter (147) geliefert werden, wobei das Muster, gemäß dem der steuerbare Schalter (147) geschaltet wird, für die zweite Hälfte der Schaltperiode aktualisiert wird,
   wobei eine Zeitdifferenz (tc) zwischen dem zweiten Zeitpunkt (513) und dem ersten Zeitpunkt (509) kleiner als eine Schaltperiode (T) zum periodischen Schalten des steuerbaren Schalters (147) ist.

2. Verfahren nach Anspruch 1,
   wobei die Zeitdifferenz (tc) größer als null Sekunden ist, insbesondere zwischen 1 % und 50 %, insbesondere zwischen 2 % und 10 %, ferner insbesondere zwischen 3 % und 7 % der Schaltperiode beträgt.

3. Verfahren nach Anspruch 1 oder 2,
   wobei die Netzperiode (Tgrid) das 10- bis 500-Fache, insbesondere das 20- bis 70-Fache, insbesondere das 50-Fache der Schaltperiode (T) beträgt.

4. Verfahren nach einem der vorhergehenden Ansprüche,
   wobei die Schaltperiode (T) zwischen 2000 Mikrosekunden und 50 Mikrosekunden, insbesondere zwischen 1000 Mikrosekunden und 100 Mikrosekunden, insbesondere 400 Mikrosekunden beträgt.

5. Verfahren nach dem vorhergehenden Anspruch,

   wobei Breiten (w1, w2, w3) der mehreren Steuerimpulse (503, 505, 507) auf dem gemessenen Spannungsabtastwert der gefilterten AC-Ausgangsspannung basieren,
   wobei die Breiten (w1, w2, w3) der mehreren Steuerimpulse (503, 505, 507) insbesondere ferner auf einem verarbeiteten gemessenen Stromabtastwert (336) basieren.

6. Verfahren nach einem der vorhergehenden Ansprüche, das ferner Folgendes umfasst:

   Messen, vor (613) dem ersten Zeitpunkt (609), mehrerer weiterer Spannungsabtastwerte zuvor gefilterter AC-Ausgangsspannungen über eine Zeitspanne (615) und
   Kombinieren, insbesondere Mitteln, der mehreren weiteren Spannungsabtastwerte und des Spannungsabtastwerts, um eine kombinierte Spannung (358) der gefilterten AC-Ausgangsspannung zu erhalten,

   wobei das Steuersignal auf der kombinierten Spannung (358) basiert.

7. Verfahren nach dem vorhergehenden Anspruch,
   wobei die Zeitspanne (615, 715) das 0,2- bis 2,0-Fache der Schaltperiode (T) beträgt, insbesondere gleich dem 0,5-Fachen der Schaltperiode ist, insbesondere gleich der Schaltperiode ist.

**8.** Verfahren nach einem der vorhergehenden Ansprüche,
wobei das Messen an einer Stelle (137) jenseits einer Filterinduktivität (123), die an einem AC-Ausgangsanschluss (121) des DC-AC-Wandlers (119) verbunden ist, durchgeführt wird, wobei die Filterinduktivität (123), insbesondere in Kommunikation mit einem mit der Stelle (137) verbundenen Pulsbreitenmodulationsfilter (131), die gefilterte Version der AC-Ausgangsspannung bereitstellt.

**9.** Verfahren nach einem der vorhergehenden Ansprüche,
wobei der Spannungsabtastwert der gefilterten Version der AC-Ausgangsspannung ferner unter Verwendung eines Butterworth-Filters (355), insbesondere eines Butterworth-Filters zweiter Ordnung, gefiltert wird, wobei das Steuersignal auf dem weiteren gefilterten Spannungsabtastwert basiert.

**10.** Verfahren nach einem der vorhergehenden Ansprüche, das ferner Folgendes umfasst:
Messen eines Stromabtastwerts (136, 336) eines Ausgangsstroms des DC-AC-Wandlers, wobei der Steuersignal ferner auf dem Stromabtastwert basiert.

**11.** Verfahren nach dem vorhergehenden Anspruch,

wobei der Stromabtastwert ein Dreiphasenstromabtastwert ist,
wobei das Verfahren ferner Folgendes umfasst:

Transformieren (359) des Stromabtastwerts in ein d/q-Koordinatensystem; und/oder
Anwenden eines Kerbfilters (361) auf den Stromabtastwert und/oder den transformierten Stromabtastwert; und/oder
Bilden einer Stromdifferenz zwischen dem Stromabtastwert oder dem kerbgefilterten transformierten Stromabtastwert und einem Referenzstrom;
Liefern der Stromdifferenz an eine PI-Steuerung (369), die eine Steuerungsausgabe bereitstellt; und/oder
Summieren der Steuerungsausgabe und eines aus einem Induktivitätswert der Filterinduktivität und einer Netzfrequenz erhaltenen Terms, um eine erste Summe (372) zu erhalten; und/oder
basierend auf der ersten Summe, Durchführen einer Transformation (371) in ein Dreiphasensignal; und/oder
Summieren des Spannungsabtastwerts (358) in Form eines Dreiphasenspannungsabtastwerts, insbesondere der mittleren Spannung, und des Dreiphasensignals, um eine zweite Summe (343) zu erhalten,

wobei das Steuersignal insbesondere auf dem transformierten Stromabtastwert und/oder
dem kerbgefilterten transformierten Stromabtastwert und/oder der Steuerungsausgabe und/oder
der ersten Summe und/oder
der zweiten Summe
basiert.

**12.** Steuerung (100, 200, 300) zum Steuern eines DC-AC-Wandlers (119) zum Umwandeln einer DC-Eingangsspannung in eine AC-Ausgangsspannung mit einer vorbestimmten Netzperiode, wobei die Steuerung Folgendes umfasst:

einen Eingangsanschluss (141) zum Erhalten eines Spannungsabtastwerts (140) einer gefilterten Version der AC-Ausgangsspannung, gemessen zu einem ersten Zeitpunkt (609);
einen Prozessor (376), eingerichtet zum Bestimmen eines Steuersignals (143) für einen steuerbaren Schalter (147) des DC-AC-Wandlers basierend auf dem gemessenen Spannungsabtastwert, wobei das Steuersignal (143) ein Pulsbreitenmodulationsmuster (503, 505, 507) über die Netzperiode hinweg, das mehrere Steuerimpulse definiert, angibt, wobei die mehreren Steuerimpulse über mehrere nachfolgende Schaltperioden, die sich über eine Netzperiode erstrecken, an den steuerbaren Schalter (147) geliefert werden,
wobei das Muster, gemäß dem der steuerbare Schalter (147) geschaltet wird, für die zweite Hälfte der Schaltperiode aktualisiert wird;
eine Steuerschaltung (374), eingerichtet zum Anpassen, zu einem zweiten Zeitpunkt, eines Leitungszustands des steuerbaren Schalters basierend auf dem Steuersignal,
wobei eine Zeitdifferenz (tc) zwischen dem zweiten Zeitpunkt (613) und dem ersten Zeitpunkt (609) kleiner als eine Schaltperiode (T) zum periodischen Schalten des steuerbaren Schalters ist.

**13.** Windturbine (101), umfassend einen DC-AC-Wandler (119) und eine Steuerung (100) nach dem vorhergehenden Anspruch, wobei die Steuerung zum Steuern des DC-AC-Wandlers dient.

**Revendications**

1. Procédé de commande d'un convertisseur (119) courant continu

   - courant alternatif pour transformer une tension d'entrée en courant continu en une tension de sortie en courant alternatif ayant une période de secteur déterminée à l'avance, comprenant :

      mesurer, à un premier point dans le temps (509), un échantillon (140) de tension d'une version filtrée de la tension de sortie en courant alternatif ;
      déterminer un signal (143) de commande d'un interrupteur (147) pouvant être commandé du convertisseur (119) courant continu

   - courant alternatif sur la base de l'échantillon (140) de tension mesurée ;

      régler, à un deuxième point dans le temps (513), un état de conduction de l'interrupteur (147) pouvant être commandé, en fonction du signal (143) de commande,
      dans lequel le signal (143) de commande est indicateur d'une configuration (503, 505, 507) de modulation en largeur d'impulsion dans la période du secteur, définissant plusieurs impulsions de commande, dans lequel on envoie les plusieurs impulsions de commande à l'interrupteur (147) pouvant être commandé sur plusieurs périodes de commutation subséquentes chevauchant une seule période du réseau,
      dans lequel on met à jour, pendant la deuxième moitié de la période de commutation, la configuration suivant laquelle l'interrupteur (147) pouvant être commandé est commuté,
      dans lequel une différence (tc) de temps entre le deuxième point dans le temps (513) et le premier point dans le temps (509) est plus petite qu'une période (T) de commutation pour commuter périodiquement l'interrupteur (147) pouvant être commandé.

2. Procédé suivant la revendication 1,
   dans lequel la différence (tc) dans le temps est plus grande que zéro seconde en représentant, en particulier entre 1 % et 50 %, en particulier entre 2 % et 10 %, d'une manière encore plus particulière entre 3 % et 7 %, de la période de commutation.

3. Procédé suivant la revendication 1 ou 2,
   dans lequel la période (Tgrid) du réseau est comprise entre 10 et 500 fois, en particulier entre 20 et 70 fois, la période (T) de commutation en étant en particulier de 50 fois la période de commutation.

4. Procédé suivant l'une des revendications précédentes,
   dans lequel la période (T) de commutation est comprise entre 2000 micro secondes et 50 micro secondes, en particulier entre 1000 micro secondes et 100 micro secondes, en étant en particulier de 400 micro secondes.

5. Procédé suivant la revendication précédente,

   dans lequel des largeurs (w1, w2, w3) des plusieurs impulsions (503, 505, 507) de commande sont basées sur l'échantillon de tension mesuré de la tension de sortie en courant alternatif filtré,
   dans lequel, en particulier, les largeurs (w1, w2, w3) des plusieurs impulsions (503, 505, 507) de commande sont basées en outre sur un échantillon (336) de courant mesuré traité.

6. Procédé suivant l'une des revendications précédentes, comprenant en outre

   mesurer, avant (613) le premier point dans le temps (609), plusieurs autres échantillons de tensions de sortie en courant alternatif filtrées antérieures sur une plage (615) de temps et
   combiner, en particulier en en faisant la moyenne, les plusieurs autres échantillons de tensions et l'échantillon de tension pour obtenir une tension (358) combinée de la tension de sortie en courant alternatif filtrée,

   dans lequel le signal de commande est basé sur la tension (358) combinée.

7. Procédé suivant la revendication précédente,
   dans lequel la plage (115, 715) de temps est comprise entre 0,2 et 2,0 fois la période (T) de commutation, en étant en particulier égale à 0,5 fois la période de commutation, en étant en particulier égale à la période de commutation.

**8.** Procédé suivant l'une des revendications précédentes,
dans lequel on effectue la mesure à un emplacement (137), au-delà d'une inductance (123) de filtrage connectée à une borne (121) de sortie en courant alternatif du convertisseur (119) courant continu - courant alternatif, dans lequel l'inductance (123) de filtrage, en particulier en combinaison avec un filtre (131) de modulation en largeur d'impulsion connecté à l'emplacement (137), donne la version filtrée de la tension de sortie en courant alternatif.

**9.** Procédé suivant l'une des revendications précédentes,
dans lequel on filtre en outre l'échantillon de tension de la version filtrée de la tension de sortie en courant alternatif, en utilisant un filtre (355) Butterworth, en particulier un filtre Butterworth du deuxième ordre, dans lequel le signal de commande est basé sur l'échantillon de tension filtrée davantage.

**10.** Procédé suivant l'une des revendications précédentes, comprenant en outre

mesurer un échantillon (136, 336) de courant d'un courant de sortie du convertisseur courant continu - courant alternatif,
dans lequel le signal de commande est basé en outre sur l'échantillon de courant.

**11.** Procédé suivant la revendication précédente,

dans lequel l'échantillon de courant est un échantillon de courant triphasé, le procédé comprenant en outre :

transformer (359) l'échantillon de courant en un système de coordonnées DQ ; et/ou
appliquer un filtre (361) de Notch à l'échantillon de courant et/ou à l'échantillon de courant transformé ; et/ou
former une différence de courant entre l'échantillon de courant ou l'échantillon de courant transformé filtré par un filtre Noch et un courant de référence ;
envoyer la différence de courant à une unité (369) de commande PI, qui donne une sortie d'unité de commande ; et/ou
sommer la sortie de l'unité de commande et un terme obtenu à partir d'une valeur de l'inductance de filtrage et d'une fréquence du secteur pour obtenir une première somme (372) ; et/ou
sur la base de la première somme, effectuer une transformation (371) en un signal triphasé ; et/ou
sommer l'échantillon (358) de tension, sous la forme d'un échantillon de tension triphasée, en particulier la tension moyenne, et le signal triphasé pour obtenir une deuxième somme (343),

dans lequel le signal de commande est basé, en particulier sur les échantillons de courant transformés et/ou
l'échantillon de courant transformé filtré par un filtre Noch et/ou
la sortie de l'unité de commande et/ou
la première somme et/ou
la deuxième somme.

**12.** Unité (100, 200, 300) de commande pour commander un convertisseur (119) courant continu - courant alternatif pour transformer une tension d'entrée en courant continu en une tension de sortie en courant alternatif ayant une période de secteur déterminée à l'avance, l'unité de commande comprenant :

une borne (141) d'entrée pour obtenir un échantillon (140) de tension d'une version filtrée de la tension de sortie en courant alternatif mesurée à un premier point dans le temps (609) ;
un processeur (376) conçu pour déterminer un signal (143) de commande d'un interrupteur (147) pouvant être commandé du convertisseur courant continu - courant alternatif sur la base de l'échantillon de tension mesuré, dans lequel le signal (143) de commande est indicateur d'une configuration (503, 505, 507) de modulation en largeur d'impulsion dans la période du secteur, définissant plusieurs impulsions de commande, dans lequel les plusieurs impulsions de commande sont envoyées à l'interrupteur pouvant être commandé (147) sur plusieurs périodes de commutation subséquentes chevauchant une seule période du réseau, dans lequel la configuration suivant laquelle l'interrupteur (147) pouvant être commandé est commuté est mise à jour pendant la deuxième moitié de la période de commutation, un circuit (374) de commande conçu pour régler, à un deuxième point dans le temps, sur la base du signal de commande, un état de conduction de l'interrupteur pouvant être commandé, dans lequel une différence (tc) de temps entre le deuxième point (613) dans le temps et le premier point dans le temps (609) est plus petite qu'une période (T) de commutation pour commuter périodiquement l'interrupteur pouvant être commandé.

**13.** Eolienne (101) comprenant un convertisseur (119) courant continu - courant alternatif et une unité (100) de commande suivant la revendication précédente, l'unité de commande étant destinée à commander le convertisseur courant continu - courant alternatif.

FIG 1

EP 2 712 475 B1

FIG 2

FIG 3

300

21

EP 2 712 475 B1

f0
theta0 365
364
2 2f0
349
0
340
355
357
358
Vfb 3
341
357
358
3/2
359
Vqp
361
Vdp
TC 400ms
TC 400ms
363

336
355
Ifb 3
335
367
3/2
359
361
-1

Iqp*
349
369
Kp+Ki/s
349
349
2πfoL
370
2πfoL
349
Vq
371 3
349 3
2/3
Vpwm
343
374
Idp*
349 369
Kp+Ki/s
372
Vd

Iqn*
349 369
Kp+Ki/s
349
359
3/2
361
2πfoL
370
2πfoL
349
2/2
Idn*
349 369
Kp+Ki/s
349
376

FIG 4

# FIG 5

# FIG 6

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5083039 A

- GB 2451463 A

**Non-patent literature cited in the description**

- **KLAUS UNTERKOFLER.** *a Double Update Mode of PWM Generation Unit of the ADMCF34X ANF34X-02 a Double Update Mode of PWM Generation Unit of the ADMCF34X Table of Contents,* 01 January 2002, 1-9, ftp://ftp.analog.com/pub/www/marketSolutions/motorControl /application-Code/admcf34x/pdf/du_modeF34X.pdf

- **VELASCO D et al.** An Active Anti-Islanding Method Based on Phase-PLL Perturbation. *IEEE TRANSACTIONS ON POWER ELECTRONICS, INSTITUTE OF ELECTRICAL AND ELECTRONICS ENGINEERS, USA,* 01 April 2011, vol. 26 (4), ISSN 0885-8993, 1056-1066